# EUROPEAN PATENT APPLICATION

(11) **EP 1 211 828 A2**
(43) Date of publication of application: **05.06.2002**
(21) Application number: 01128641.6
(22) Date of filing: 30.11.2001
(51) Int. Cl.: H04H 1/00, H04L 12/00, H04Q 7/20, H04M 1/725

(54) **Receiver device comprising a receiver for receiving broadcast data as well as receiving data via a communication system**

(30) Priority: 30.11.2000 JP 2000366335
(71) Applicant: MATSUSHITA ELECTRIC INDUSTRIAL CO., LTD., Kadoma-shi, Osaka 571-8501 (JP)
(72) Inventor: Sakata, Tsuyoshi, Yokohama-shi, Kanagawa 241-0816 (JP); Itoh, Hayashi, Matsudo-shi, Chiba 271-0045 (JP); Matsuura, Shun, Suginami-ku, Tokyo 166-0014 (JP)
(74) Representative: Betten & Resch

(57) **Abstract**

Since there has been conventionally provided no device effectively mixing a broadcasting characteristic and a communication characteristic for the transmission and receiving of one information, the cost for information transmission and receiving is disadvantageously pushed up and it takes a disadvantageously long time.

To solve this problem, this invention adopts a configuration in which a content which is information to be fed from a transmitting end to a receiving end, information on presence/absence of various instructions for controlling a terminal function and various instructions themselves are transmitted and received using both broadcasting, and communication which is intended for specific parties.

## Description

### FIELD OF THE INVENTION

The present invention relates to a receiving device, and particularly relates to a receiving device capable of receiving information by both broadcast means and communication means.

### BACKGROUND OF THE INVENTION

As receiving devices, there have been provided two types of receiving devices, i.e., a receiving device receiving a broadcast and viewing and listening to a content which is the received content of the broadcast such as with conventional television, and a receiving device acquiring data using one-to-one communication means and used for electronic mail such as an Internet terminal.

The broadcast means has a characteristic of being capable of simultaneously transmitting a large volume of information having the same content at low cost, while the communication means transmitting data after selecting a specific party has a characteristic of being capable of transmitting inherent information to each receiving terminal. In other words, the same content of information can be received at low cost by broadcasting, while information inherent to a receiving device can be received by one-to-one communication. However, there has not been conventionally provided a device in which these characteristics are effectively mixed for the transmission and receiving of information, with the result that information transmission and receiving cost is disadvantageously pushed up and long time is disadvantageously required for the information transmission and receiving.

### SUMMARY OF THE INVENTION

To solve these problems, the present invention adopts a configuration for transmitting and receiving a content which is information to be transmitted from a transmitting end to a receiving end and information on the presence/absence of various instructions for controlling the function of a terminal as well as the various instructions themselves by using both broadcasting and communication.

### BRIEF DESCRIPTION OF THE DRAWINGS

- FIG. 1: is a view showing the concept of the first embodiment for carrying out the invention.
- FIG. 2,: including FIG.2(a) and 2(b), is a view showing the concrete examples of permanent information and variable information in the third embodiment for carrying out the invention.
- FIG. 3: is a view showing the concrete example of information synthesized from permanent information and variable information in the third embodiment for carrying out the invention.
- FIG. 4: is a view showing the functional blocks of a receiving device in the first embodiment for carrying out the invention, together with a transmission device and communication means.
- FIG. 5: is a view showing the functional blocks of the receiving device in the first embodiment for carrying out the invention, together with a transmission device and communication means.
- FIG. 6,: including FIG.6(a) and 6(b) is a view showing a processing flow in the first embodiment for carrying out the invention.
- FIG. 7: is a view showing a processing flow in the first embodiment for carrying out the invention.
- FIG. 8: is a view showing the functional blocks of a receiving device in the second embodiment for carrying out the invention, together with a transmission device and communication means.
- FIG. 9: is a view showing a processing flow in the seventh embodiment for carrying out the invention.
- FIG. 10: is a conceptual view showing the seventh embodiment for carrying out the invention.
- FIG. 11: is a view showing a processing flow in the second embodiment for carrying out the invention.
- FIG. 12: is a view showing a processing flow in the second embodiment for carrying out the invention.
- FIG. 13: is a view showing the concrete examples of permanent information and variable information in the third embodiment for carrying out the invention.
- FIG. 14: is view showing the functional block diagram of a receiving device in the fifth embodiment for carrying out the invention, together with a transmission device and transmission means.
- FIG. 15: is a view showing a processing flow in the fifth embodiment for carrying out the invention.
- FIG. 16: is a view showing a processing flow in the sixth embodiment for carrying out the invention.
- FIG. 17: is a view showing the functional blocks of a receiving device in the seventh embodiment for carrying out the invention.
- FIG. 18: is a conceptual view showing one embodiment of the fourth embodiment for carrying out the invention.
- FIG. 19: is a conceptual view of instruction presence information in the sixth embodiment for carrying out the invention.
- FIG. 20: is a view showing a manner in which an icon is displayed on a receiving device which received the instruction presence information in the sixth embodiment for carrying out the invention.

### DETAILED DESCRIPTION

Embodiments for carrying out the invention will be described hereinafter.

### FIRST EMBODIMENT

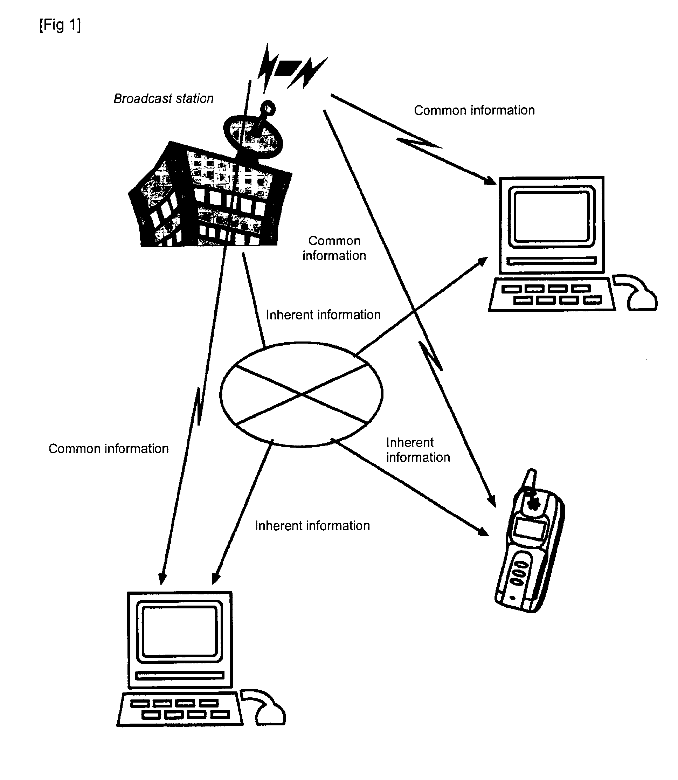

As shown in FIG. 1, the embodiment for carrying out the invention to be described first is a receiving device capable of acquiring information by both broadcasting and communication. If information common to a plurality of receiving devices is transmitted to these receiving devices by broadcasting, this receiving device receives the common information and also receives inherent information inherent to the receiving device by communication. The receiving devices may be television sets connected to the telephone line, personal computers (PCs), mobile phones such as cell phones, and personal digital assistants (PDA), for example.

The advantage of the invention as means for solving the problems is substantially the same, whether broadcasting and communication are provided by the same device or different devices. Here, broadcast generally means "wireless communication or wire communication intended to allow information to be directly received by the public" while communication means electric communication except for broadcast communication. Accordingly, it can be understood that the former is characterized by transmitting information to many and unspecified people and that the latter is characterized by transmitting information among specified people.

To be specific, this receiving device is a receiving device including a broadcast receiving section receiving data transmitted by broadcast means; and a data accepting section accepting data transmitted by communication means, characterized in that the broadcast receiving section receives common information which is information common to a plurality of receiving devices; and the data accepting section accepts inherent information which is information inherent to the receiving device. That is, the inherent information is meant to be used by one or more specific receiving devices in a large population of receiving devices.

The information common to a plurality of receiving devices mentioned herein means, for example, a content which is a nationwide news program, global standard time information, receiving device maintenance information used if a program defect common to a plurality of receiving devices are discovered, information on the list of nationwide broadcast programs which can be viewed and listened to by a plurality of receiving devices in common and the like. These pieces of information are common to a plurality of receiving devices. If these pieces of information are transmitted over a communication line, it requires relatively high cost. It is preferable, therefore, to transmit and receive the common information using broadcast means.

The information inherent to a receiving device is so-called dedicated information inherent to each receiving device such as local news limited to an area in which the receiving device is located, deviation time information for calculating the time of the day at the position at which the receiving device is located at present from global standard time information received as the common information (which information is useful if the receiving device itself is moved around the globe including a case where the receiving device itself is in an airplane), maintenance information inherent to the receiving device, or information on broadcast programs receivable only in an area in which the receiving device is located. The inherent information mentioned herein is not necessarily limited to sole, inherent information but is information which is not common to all receiving devices. Therefore, if information is common to a plurality of receiving devices, e.g., a subset of a population of receiving devices, but not common to all receiving devices, then the information can be referred to as inherent information. Since inherent information is transmitted to each receiving device by means of communication, it tends to take relatively high communication cost. However, the receiving device receives common information by broadcasting and uses the communication means only for inherent information which does not include common part. Due to this, it takes lower cost than that required if the receiving device receives all the information by the communication means. If common information and inherent information are combined into one information, in particular, a conventional receiving device receives the entire information by communication means. Considering this, the receiving device in this embodiment for carrying out the invention is superior to the conventional receiving device in that low-cost broadcasting is partially used.

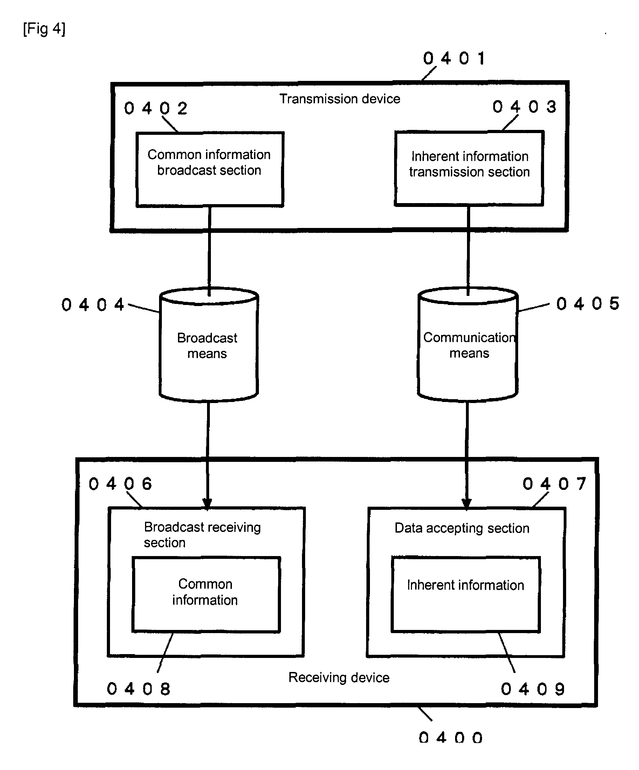

FIG. 4 shows one example of the functional block diagram of this receiving device together with a transmission device and transmission means. As shown in FIG. 4, a transmission device 0401 includes a common information broadcast section 0402 and an inherent information transmission section 0403. Common information 0408 is broadcast from the common information broadcast section 0402 by using broadcast means and received by the broadcast receiving section 0406 of a receiving device 0400.

On the other hand, inherent information 0409 is transmitted from the inherent information transmission section 0403 of the transmission device 0401 to the receiving device 0400 by communication means 0405 and received and accepted by the data accepting section 0407 of the receiving device 0400. The common information 0408 is applied to the common information broadcast section 0402 from a common information storage section (not shown) storing common information. The inherent information 0409 is applied to the inherent information transmission section 0403 from an inherent information storage section (not shown) storing inherent information, and an inherent information generation section (not shown) generating inherent information or the like.

The broadcast means 0404 may involve, e.g., wire broadcasting and Internet broadcasting as well as terrestrial wave broadcasting and satellite broadcasting. Signals constituting this broadcast may be either digital signals or analog signals. Communication may be either by wire or by wireless. The communication includes various types of communication such as communication using a public line such as a telephone line and communication using a dedicated line. The communication also includes both communication by connecting lines and communication using packet or cell communication.

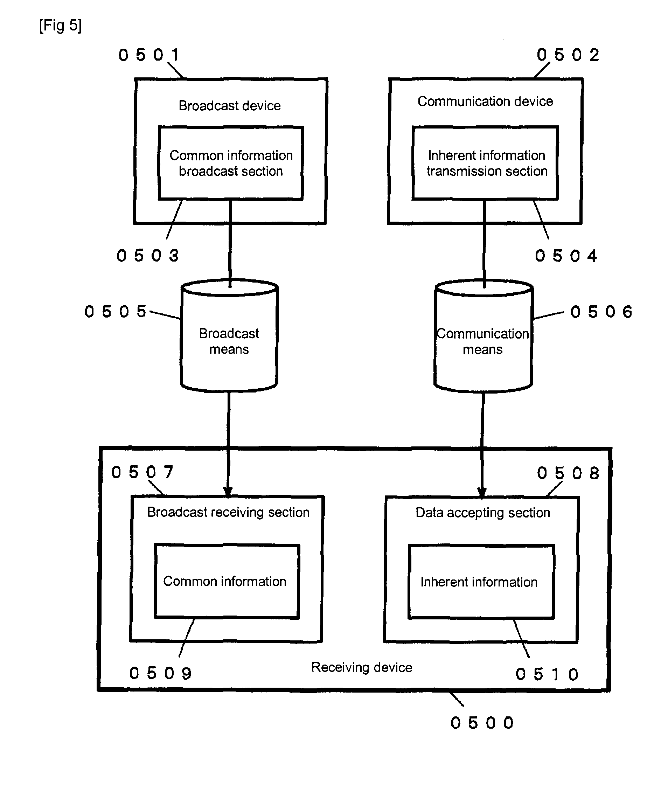

FIG. 5 shows a modification of this embodiment for carrying out the invention. In this modification, as elements transmitting common information 0509 and inherent information 0510 to a receiving device 0500, there are provided a broadcast device 0501 transmitting the common information 0509 and a communication device 0502 transmitting the inherent information 0510 and these devices are provided separately. The broadcast device broadcasts common information from a common information broadcast section 0503 using broadcast means 0505, while the communication device 0502 transmits inherent information from an inherent information transmission section 0504 using communication means 0506. In a receiving device, a broadcast receiving section 0507 receives the common information and a data accepting section 0508 accepts the inherent information.

In this way, a common information transmitting end and an inherent information transmitting end may be provided separately or integrally. Further, an element transmitting the common information and the inherent information may be constituted out of a plurality of devices. Accordingly, it suffices that a plurality of common information parts and inherent information parts are united together to constitute entire common information and inherent information. For example, one common information may be completed by two pieces of common information.

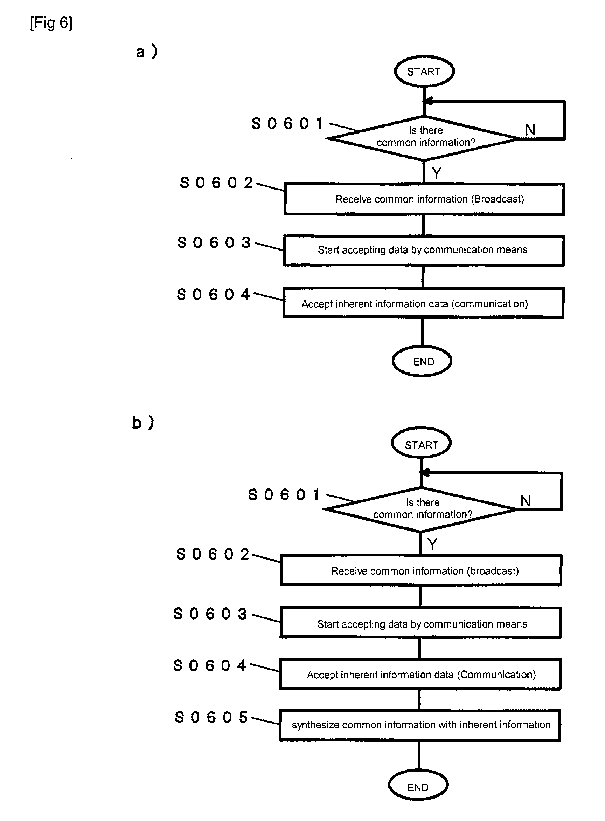

FIG. 6, including FIG.6(a) and 6(b), shows one example of a processing flow in this receiving device. First, in FIG.6(a), it is determined whether there is common information by broadcasting (in a step S0601). If there is no common information, the receiving device is set in a standby state. If there is common information, the receiving device receives the common information by broadcasting (in a step S0602). If this common information requires, for example, inherent information by the communication means, the receiving device also starts accepting data by the communication means (in a step S0603), accepts the inherent information data by communication (in a step S0604) and finishes the processing.

To start accepting data by the communication means is to set the receiving device in a communicable state and to issue a data transmission request to a transmitting end. In case of dial-up Internet connection, for example, the receiving device is connected to a remote computer by dialing up the remote computer and the receiving device transmits a data request signal to a server which is to transmit data through this remote computer.

As shown in FIG. 6b), the following processing may be performed. It is determined whether or not there is common information by broadcasting (in a step S0601). If there is no common information, the receiving device is set in a standby state. If there is common information, the receiving device receives the common information by broadcasting (in a step S0602), starts accepting data by the communication means (in a step S0603), accepts inherent information data by communication (in a step S0604) and synthesizes the received common information and the accepted inherent information (in a step S0605).

To synthesize is to read the common information and the inherent information into one file. This is advantageous in that information can be made integral, significant information by combining the common information with the inherent information. A program for this processing may be recorded on a recording medium, read by the receiving device to allow the receiving device to perform the processing. Alternatively, the program may be downloaded to the receiving device by the communication means or broadcast means to allow the receiving device to perform the processing. The same is basically true for the descriptions, to be given later, to processing flows and no repetitive description will be given.

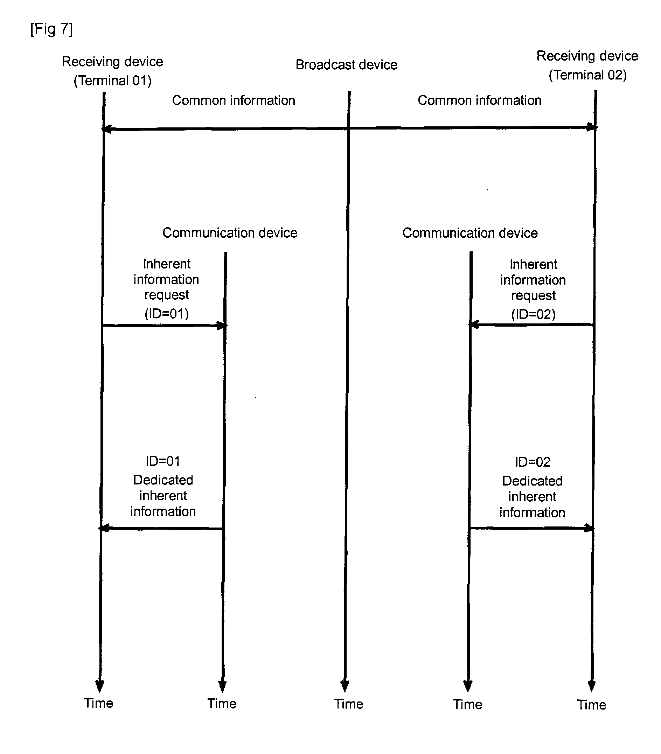

FIG. 7 shows a manner in which two terminals (terminal 01 with ID = 01; and terminal 02 with ID = 02) serving as the receiving devices receive, as common information, an inherent information receiving instruction by broadcasting, request inherent information to respective communication devices in accordance with the inherent information receiving instruction which is common information, and receive inherent information from the respective communication devices.

A broadcast device broadcasts common information to the receiving devices which are the two terminals. The terminals 01 and 02 receive the common information and then request inherent information including their own ID information to the communication devices, respectively. In accordance with the received ID information, each communication device transmits dedicated, inherent information to the terminal having the ID. Each receiving device which is the terminal receives the inherent information. In case of Internet communication, the header of a packet cell includes the Internet address of the receiving device to which the information is to be transmitted. A router constituting a network node sets a route on the network in accordance with the Internet address included in this header and delivers a packet including the inherent information to the targeted receiving device.

In this example, description has been given to a processing flow in which the common information is accepted and then, if necessary, the inherent information is accepted by the communication means. The processing flow in the receiving device is not necessarily limited thereto. It is also possible to perform an operation for accepting inherent information prior to common information by the communication means and then for accepting, if necessary, the common information by the broadcast means. It is also possible to accept the common information and the inherent information in parallel. The receiving device in this embodiment for carrying out the invention is available to not only in a case where the common information and the inherent information have a relationship in which one information needs the other but also a case where the common information and the inherent information have no relation to each other.

### SECOND EMBODIMENT

The second embodiment for carrying out the invention is a receiving device having the same configuration as that of the first embodiment for carrying out the invention. This embodiment is characterized in that the common information as so mentioned in the first embodiment for carrying out the invention is common information necessary when accepting data by communication means. In addition, it is characterized in that the inherent information as so mentioned in the first embodiment is information inherent to the receiving device and necessary when accepting data by communication means. Furthermore, compared with the first embodiment, the second embodiment for carrying out the invention is characterized by including a write section writing the common information and the inherent information.

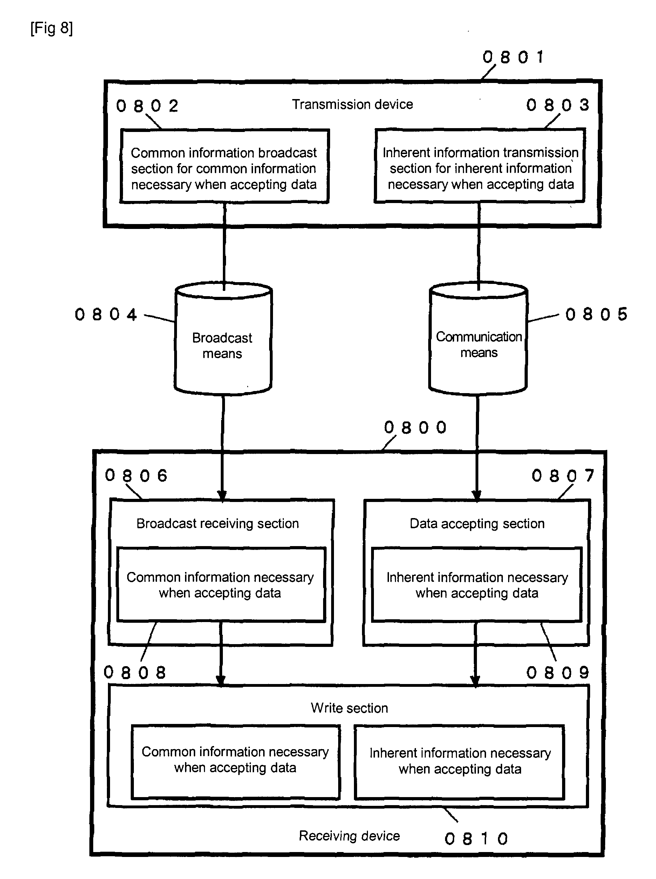

FIG. 8 shows one example of the functional block diagram of the receiving device in the second embodiment for carrying out the invention, together with a transmission device and transmission means. As shown in FIG. 8, the transmission device 0801 includes a common information broadcast section 0802 and an inherent information transmission section 0803 transmitting inherent information necessary when accepting data. Common information is transmitted from the common information broadcast section 0802 to the receiving device 0800 using broadcast means 0804, and inherent information necessary when accepting data is transmitted to the receiving device 0800 using communication means 0805.

In the receiving device 0800, the common information broadcast is received by a broadcast receiving section 0806, to be specific, a tuner, an RF module or the like. The inherent information, transmitted from the communication means 0805, necessary when accepting data is accepted by a data accepting section 0807. The data accepting section 0807 is, for example, a modem and the driver of the modem. The common information and the inherent information necessary when accepting data are written to a storage section (not shown) by a write section 0810. The storage section may not be necessarily included in the receiving device 0800 and may be included in the write section 0801 itself. The storage section may include a magnetic recording medium, a magneto-optical recording medium, a semiconductor memory such as a random-access memory or a read-only memory, or the like. A CD, a DVD, a RAM, a ROM, an FD (floppy disk), an HDD (hard disk drive) or the like corresponds to the storage section.

If this write section 0810 includes the storage section, the storage section may be nonvolatile or volatile and the common information and the inherent information necessary when accepting data may not be necessarily written to the same storage section. Aplurality of write sections may be provided and the common information and the inherent information necessary when accepting data may not be written from the same write section.

The common information necessary when accepting data is, for example, various setting information for communication (such as the dial number of a remote computer for communication), address information on a communication party, communication protocol information, information on the size of data to be accepted (so as to determine whether the receiving device includes a storage device having a capacity sufficient to store the data), information on the type of communication data (so as to determine, for example, whether the receiving device has an application capable of viewing an image file and the like) and the like.

The information inherent to the receiving device and necessary when accepting data is, for example, an identification code allocated to each terminal (which code is used to show the level of an information service and to inform a transmitting end of the type and the like of data to be transmitted when receiving the data), an address for communication allocated to the terminal (e.g., a network address in the LAN), a mail address allocated to each terminal and the like.

These pieces of information are recorded on the storage section or the like by the write section 0810 and, when receiving data, read from the storage section to use the information.

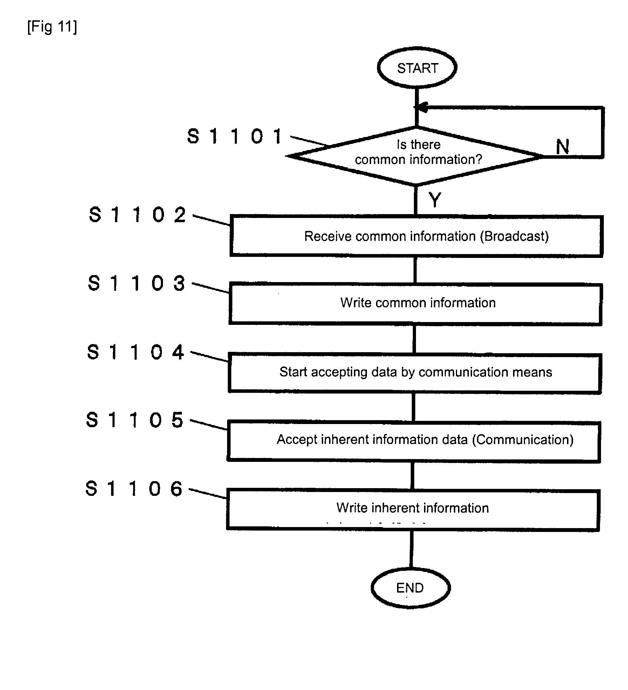

FIG. 11 is a flow chart showing a processing flow in this receiving device. First, it is determined whether there is common information, i.e., common information to be received. If there is the common information to be received, common information by broadcasting is received. If there is no common information to be received, the receiving device is set in a standby state until common information to be received arrives.

When the common information is received, the common information is written by the write section. An element to which the common information is written is the storage section. The storage section may be provided in the receiving device or outside thereof. In addition, the write section itself may include the storage section.

Next, the acceptance of data is started by the communication means. The start of the data acceptance may be triggered by the receiving of the common information (such as a communication start instruction included in the common information) or may be conducted independently of the receiving of the common information. If the data acceptance is started by the communication means, the inherent information data is accepted and then the inherent information is written. A storage section to which the inherent information is written may be the same as the storage section to which the common information was written or may be different. When the writing of data is completed, the processing is finished.

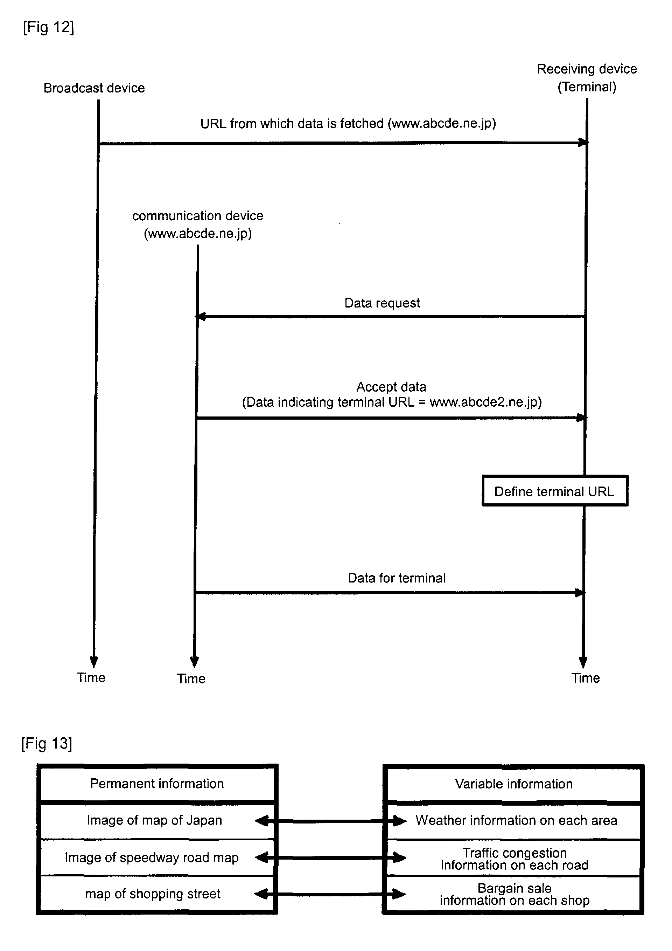

FIG. 12 is a view conceptually showing a manner in which the receiving device (terminal) receives an address from which data is to be fetched by broadcasting and the data is fetched from the address by communication. Here, it can be said that the address from which the data is fetched is acquired by the receiving device by broadcasting and is necessary information when the receiving device accepts the data by the communication means.

The receiving device which acquired the address (e.g., www.abcde.ne.jp) from which the data is fetched requests data to the address. For example, the communication device here feeds data indicating that the Uniform Resource Locator (URL) of the terminal to the receiving device is www.abcde2.ne.jp. This received data is written by the write section to thereby define the terminal's URL as www.abcde2.ne.jp. Then, using the Local Area Network (LAN), this receiving device can receive, as the terminal URL, data which destination is www.abced2.ne.jp.

Here, the receiving device acquires the address from which the data is to be fetched. The address from which the data is to be fetched can be said to be information inherent to the receiving device and necessary when the data is accepted by the communication means.

### THIRD EMBODIMENT

Next, description will be given to a embodiment for carrying out the invention which is a receiving device including a broadcast receiving section and a data accepting section for accepting data by communication. The data accepted by the broadcast receiving section is permanent information which content does not change with the passage of time and the data accepted by the data accepting section is variable information which is information changing with the passage of time.

The functional block diagram of the receiving device in this embodiment for carrying out the invention is basically the same as that of FIG. 4 or 5 shown in the first embodiment for carrying out the invention. The receiving device is characterized in that information received by the broadcast receiving section is permanent information which is information of a type having an attribute that the content of the information does not change with the passage of time and in that information accepted by the data accepting section is variable information which is information of a type having an attribute that the content of the information changes with the passage of time.

FIG. 13 shows examples of the permanent information and the variable information. For example, the permanent information can be exemplified by the image of the map of Japan and the variable information can be exemplified by weather information on each area. Besides, the permanent information can be exemplified by a speedway map and the variable information corresponding to the speedway map can be exemplified by traffic congestion information on each road on this speedway map. Furthermore, the permanent information can be exemplified by the image of the map of a shopping street and the variable information corresponding to the shopping street can be exemplified by bargain sale information on each shop.

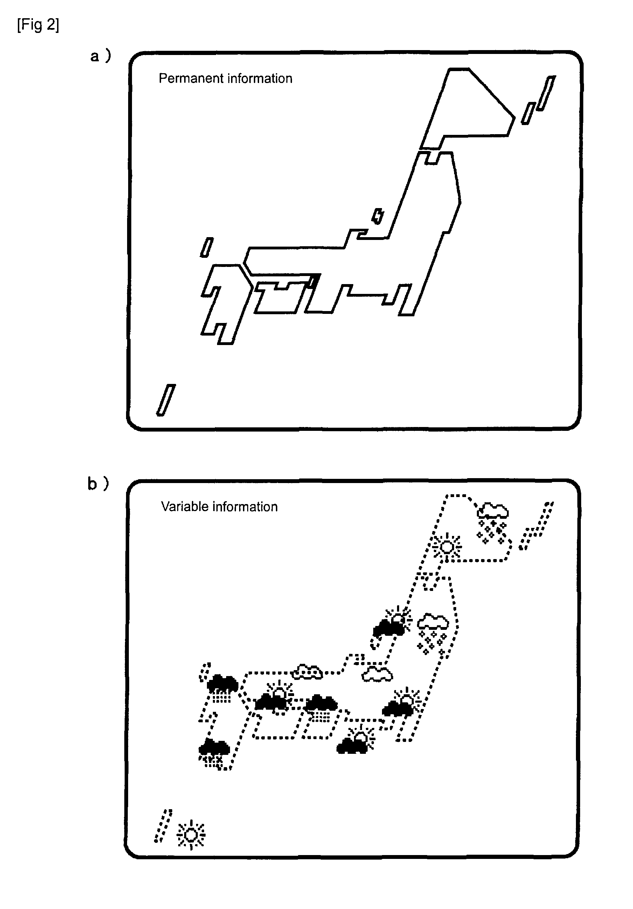

FIG. 2, including FIG.2(a) and 2(b), is a conceptual view showing this map information serving as the permanent information and the variable information showing the weather of each area on this map. The map information consists only of data constituting the map, e.g., bitmap information. This map information does not change with the passage of time. On the other hand, the variable information is weather information on each area indicated in this map information and shows how the weather is in each area, fine, rainy, cloudy or the like. This variable information includes information indicating positions on the map constituted out of bitmap information as described above and associated weather information. This information is weather information and, therefore, the weather information which is the content of this information changes with the passage of time. By integrating and synthesizing the permanent information with the variable information, so-called weather marks are put on the map and a weather map visually representing the weather of each area is thereby completed.

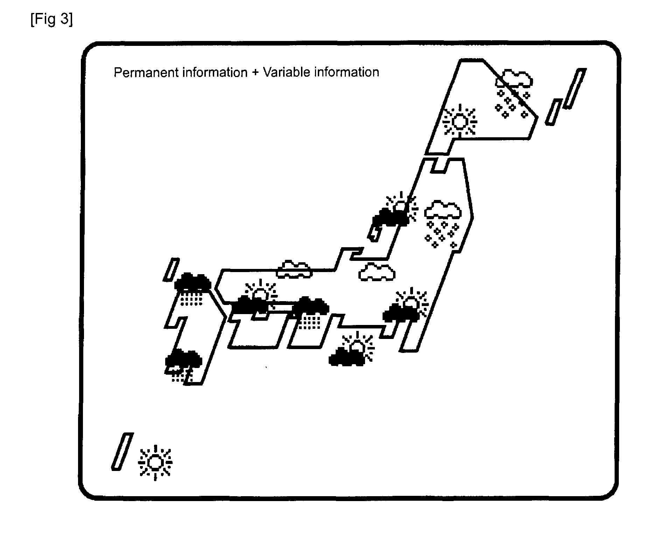

FIG. 3 is a view showing the weather in each area which is meaningful information by synthesizing the permanent information shown in FIG. 2(a) and the variable information shown in FIG. 2(b) into integral information. Since the image of the map of Japan does not change with the passage of time, it suffices that the information is broadcast from one broadcast device, e.g., a broadcast satellite to receiving devices around the nation. On the other hand, since weather information on each area changes with the passage of time, only the information on a change may be transmitted from a weather station in each area to each receiving device by communication. Here, to synthesize the permanent information with the variable information means to write these two pieces of information to one file and to create one meaningful, integral information from the two pieces of information. If the permanent information shown in FIG. 2a) is synthesized with the variable information shown in FIG. 2b) in the receiving device, the weather map of the whole of Japan is completed as shown in FIG. 3.

Likewise, the permanent information can be exemplified by a speedway map and the variable information can be exemplified by traffic congestion information on each road transmitted from a sensor on each road. The permanent information can be exemplified by the image of the map of a shopping street and the variable information can be exemplified by real-time bargain sale information on each shop.

### FOURTH EMBODIMENT

Further, the receiving device in the third embodiment for carrying out the invention may be constituted so that the broadcast receiving section receives data constituting a hypertext and that the data accepting section accepts link information which is information showing the links of the hypertext. Here, the hypertext is obtained by assuming a part of a text as a node, associating nodes included in a plurality of texts with one another to thereby create links and navigating the receiving device between the nodes to thereby allow the receiving device to efficiently acquire information. Alternatively, a part of multimedia data may be set as a node. The multimedia data involves still images, moving images, texts, voices and the like. In this embodiment for carrying out the invention, the links of each node are constituted out of not only fixed links but also information indicating links accepted by the data accepting section, thereby realizing dynamic links. Accordingly, every time the data accepting section accepts link information, it is possible to change the links from the same node.

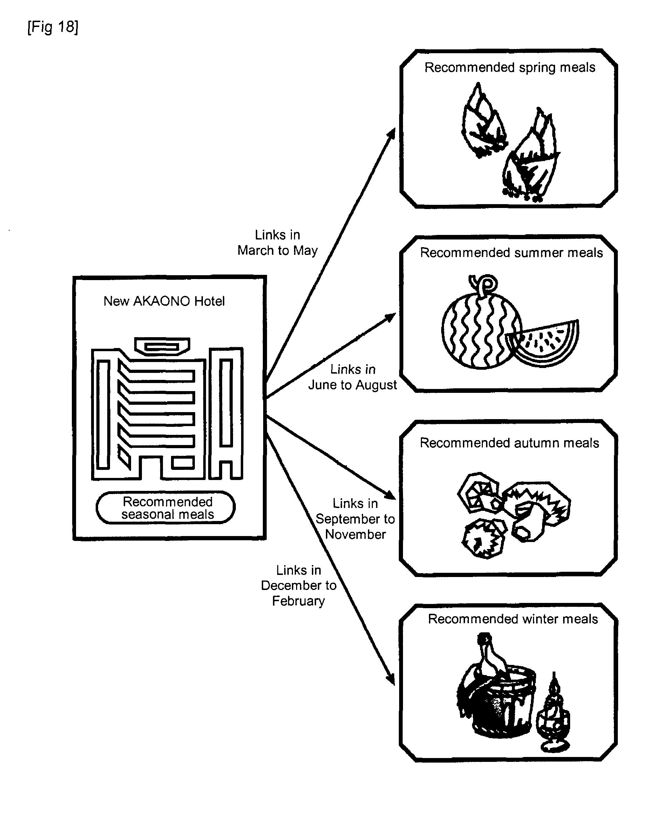

FIG. 18 shows one example of the above. For example, data constituted out of a hypertext representing hotel guide information on each area may be received as permanent information and link location information on the node which is a character part denoted by "seasonal meal" at each restaurant may be links representing seasonal meal information. Then, the data indicating link information may be applied to the data accepting section so that the "seasonal meal" at each restaurant is linked to locations introducing summer season meals in summer and to locations introducing winter season meals in winter, and so forth.

### FIFTH EMBODIMENT

In the fifth embodiment for carrying out the invention, the broadcast receiving section of a receiving device receives instruction presence information and the data accepting section of the receiving device accepts instruction information by communication means based on the instruction presence information. "Instruction information" means here information for forcing the receiving device to perform a certain operation and by such information the forced operation of the specific function of the receiving device gets started. Also, "instruction presence information" means information for notifying a receiving end that there is instruction information which the receiving device is to receive by the communication means. This instruction presence information may include identification information on a server which is a transmitting end or the identifier of an instruction to be transmitted. The identification information on the server which is a transmitting end may include URL information or the like in which the information to be transmitted is stored. Also, the identifier of the instruction to be transmitted shows that a recording reservation instruction, such as for recording the reservation of power-on/off time of the heating or cooling system of the home or recording television programs or radio programs, for example, is transmitted or that a power-on instruction is transmitted. By doing so, the receiving device can prepare for an instruction to be transmitted in advance. If the information is recording reservation information, it is examined whether or not the capacity of the storage device is sufficient. If the information is a power-on instruction, it is examined whether or not the device is connected to a power source.

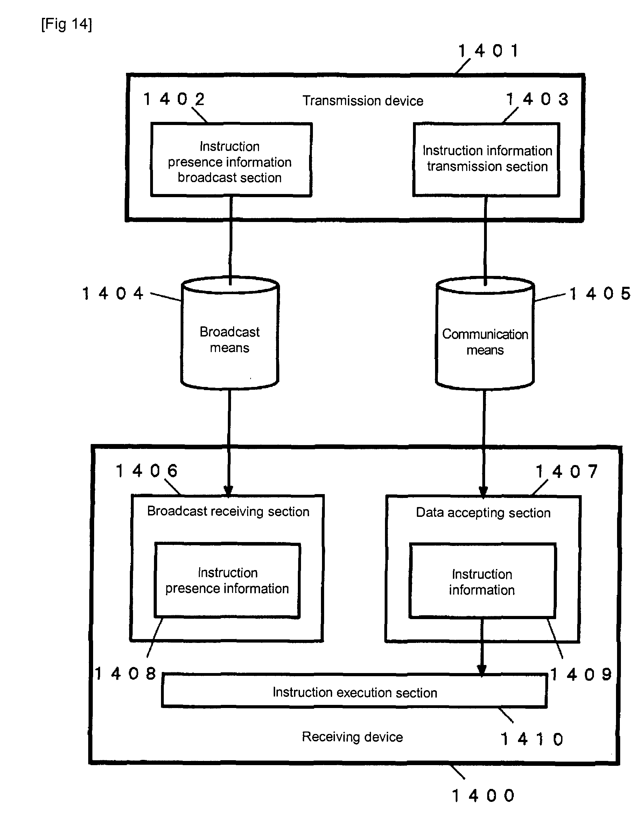

FIG. 14 shows one example of the functional block diagram of the receiving device in this embodiment for carrying out the invention, together with a transmission device and transmission means. As shown in FIG. 14, the transmission device 1401 includes an instruction presence information broadcast section 1402 and an instruction information transmission section 1403. The instruction presence information broadcast section 1402 broadcasts instruction presence information 1408 to the receiving device 1400 by broadcast means 1404, and the instruction information transmission section 1403 transmits instruction information 1409 to the receiving device 1400 by communication means 1405.

The instruction presence information 1408 is applied to the broadcast receiving section 1406 of the receiving device 1400 by the broadcast means 1404. The receiving device 1400 which received the instruction presence information 1408 starts communication based on this instruction presence information 1408. If communication has been already established, the receiving device 1400 continues the communication and accepts the instruction information 1409. The instruction information 1409 is accepted by the data accepting section 1407 of the receiving device 1400.

If the instruction presence information 1408 includes information on the address of the server which is the transmitting end of the instruction information 1409, the receiving device 1400 starts communicating with the server to which the instruction information 1409 is to be transmitted while referring to the information. The data accepting section 1407 accepts the instruction information 1409 and the instruction indicated by the accepted instruction information 1409 is executed by the receiving device 1400. This instruction is executed by the instruction execution section 1410 of the receiving device 1400.

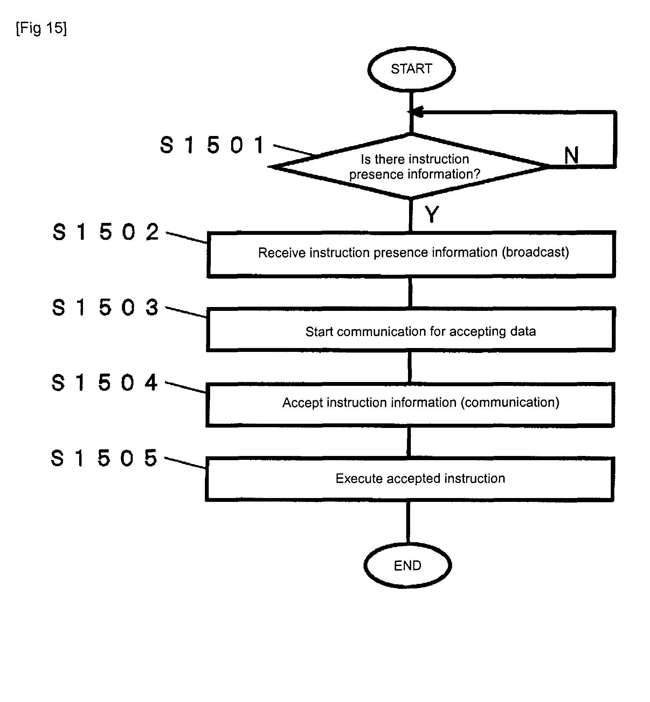

FIG. 15 shows a processing flow in the receiving device in the fifth embodiment for carrying out the invention. As shown in FIG. 15, the receiving device 1400 first determines whether or not there is an instruction presence information (in a step S1501) and waits until the instruction presence information arrives. If there is the instruction presence information, the receiving device 1400 receives the information (in a step S1502), starts communication for accepting data (in a step S1503) and accepts instruction information based on the received instruction presence information (in a step S1504). When receiving the instruction information, the receiving device 1400 executes an instruction included in the accepted instruction information (in a step S1505) and finishes the processing.

### SIXTH EMBODIMENT

The sixth embodiment for carrying out the invention to be described hereinafter is basically the same receiving device as that in the fifth embodiment for carrying out the invention and characterized in that the instruction presence information is information indicating whether or not there is an electronic mail, i.e., a mail, and in that the instruction information includes the content of the mail. In this case, an operation which the mail forces the receiving device to execute is storing the content of the mail included in this instruction information in a predetermined storage section. Accordingly, the instruction execution section of the receiving device acquires the content of the mail from the accepted instruction information and stores the content of this mail in such a manner as to be readable by an application software. Also, since the instruction presence information is information indicating whether or not there is a mail, the instruction information may not be necessarily information only indicating that there is a mail but may be information indicating that there is no mail to be received. To provide such information, the specific bit of a signal included in a broadcast to be received may be "1" or "0". If there is no mail to be received, a mail acquisition operation to the server transmitting the mail by communication means does not start but a processing for establishing communication with the other server can be performed. For example, it is possible to accept news information stored in a specific server.

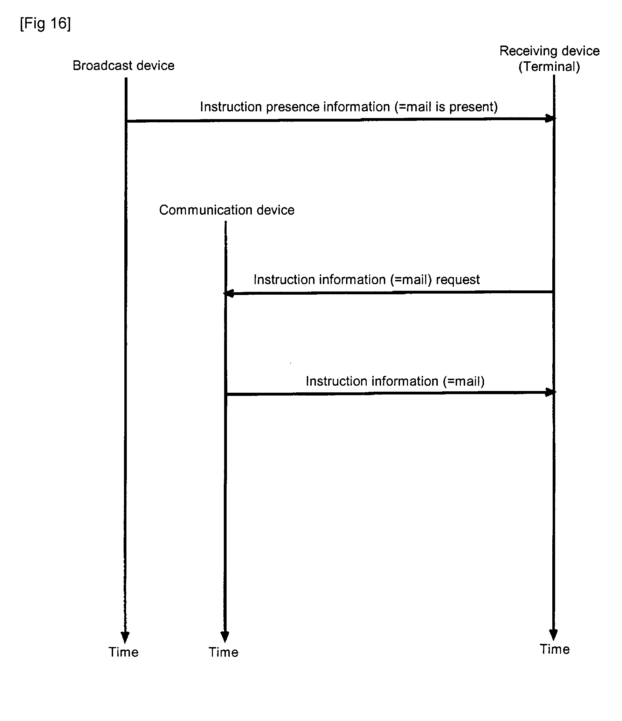

FIG. 16 shows one example of processing in this embodiment for carrying out the invention. As shown in FIG. 16, instruction presence information indicating that there is a mail to be received is transmitted from a broadcast device and the receiving device receives this information. Based on the information indicating the presence of a mail, the receiving device issues an instruction information request to a server which is the communication device transmitting a mail to be received. Normally, to issue an instruction information request, the address, the identification code and the like of the receiving device are simultaneously transmitted to thereby allow the communication device to specify the receiving device with which the communication device communicates. The communication device, which accepted the request of the instruction information specifying the address of the receiving device, i.e., the mail request, transmits a mail which is instruction information to the receiving device indicated by the specified address.

In the above description, the instruction presence information is information on one receiving device. However, information which is a combination of instruction presence information on a plurality of receiving devices may be broadcast to the plural receiving devices.

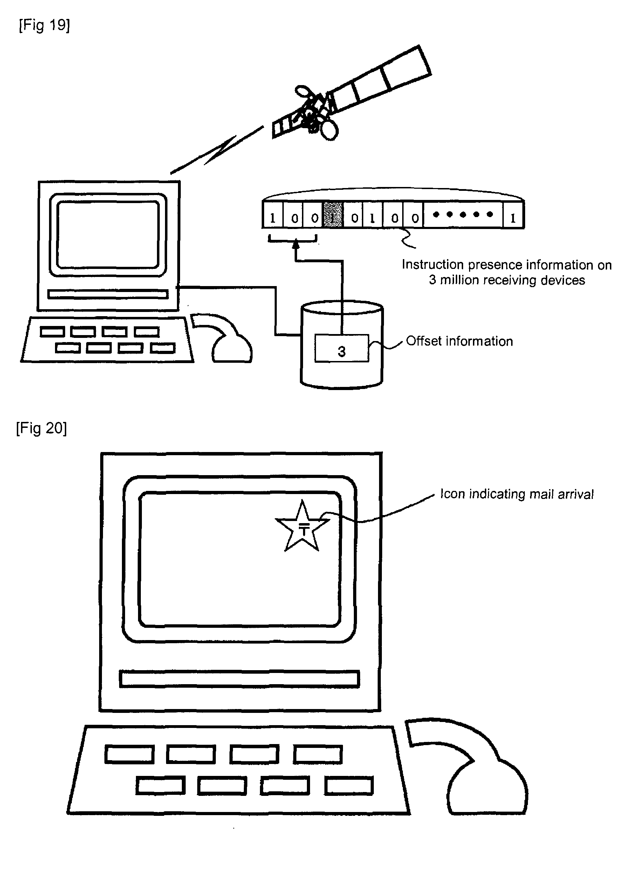

As shown in FIG. 19, for example, instruction presence information on three million receiving devices may be described in 3Mbit (3 megabits) and broadcast. In that case, each receiving device holds offset information in 3Mbit and determines whether or not an electronic mail arrives based on the offset information. In FIG. 19, the offset information is "3", so that the receiving device fetches information on the fourth bit. Since the fourth bit is "1", it is indicated that an electronic mail arrives at the receiving device. If so, the receiving device may display an icon indicating mail arrival so as to notify the user of the mail arrival as shown in FIG. 20.

It is noted that the offset information may be stored in each receiving device in advance or transmitted by communication. In addition, the icon is normally stored in each receiving device.

### SEVENTH EMBODIMENT

The seventh embodiment for carrying out the invention is basically the same as the fifth embodiment for carrying out the invention and characterized in that the instruction presence information is information on the presence/absence of information indicating a recording reservation and in that the instruction information includes information (a channel, a time zone and the like) necessary for the recording reservation.

The recording reservation means the reservation of the recording function of a receiving device or a device controlled by the receiving device, e.g., the designation of recording start time in advance for recording a content to be received by broadcasting on a storage device or the designation and programming of the length of recording time.

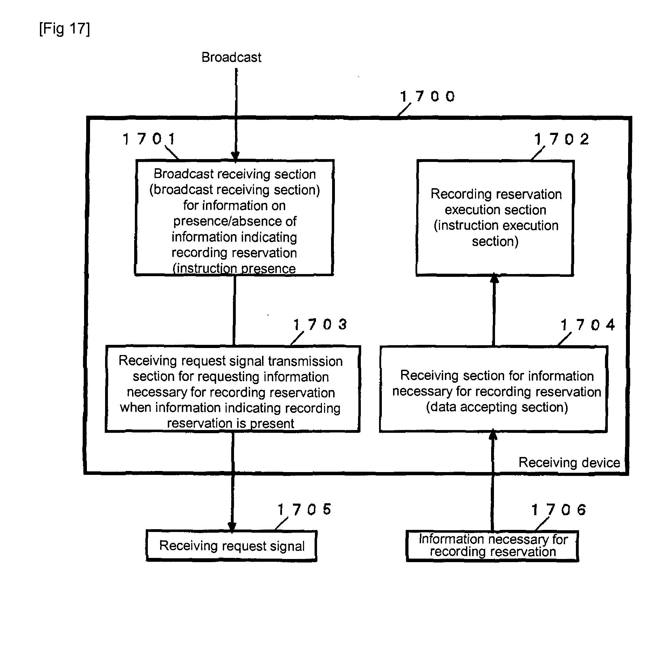

FIG. 17 shows one example of the functional blocks of this embodiment for carrying out the invention. Information on the presence/absence of information indicating a recording reservation, i.e., instruction presence information is transmitted by broadcasting and a broadcast receiving section 1701 for information on the presence/absence of information indicating a recording reservation, receives this information. If this received information includes information on the presence of information indicating a recording reservation, a receiving request signal 1705 is transmitted from a receiving request signal transmission section 1703 requesting information necessary for a recording reservation. A communication device receiving this receiving request signal 1705 transmits the information necessary for a recording reservation by communication and the receiving section for information 1706 necessary for a recording reservation, i.e., the data accepting section 1704 of the receiving device 1700 accepts this information. The accepted information is the information 1706 necessary for a recording reservation, i.e., instruction information. This instruction information is fed to an instruction execution section 1702 to allow the execution section 1702 to execute a recording reservation.

To be specific, a program for setting a recording timer or a program for starting recording when the identification signal of a content to be recorded is received and for finishing the recording when an end signal for the content to be recorded is received, is executed. In the latter case, since the program is not intended to make a time setting, the program is advantageously capable of surely recording the content even if the content is started later or earlier than planned program time.

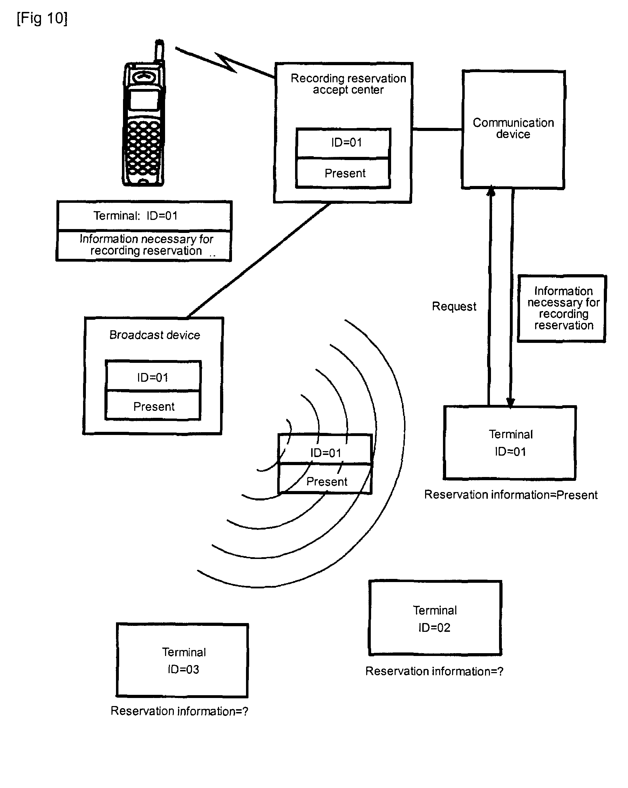

FIG. 10 is a conceptual view showing a manner in which a person, who is out while carrying a mobile terminal, makes a recording reservation to the receiving device at home from the outside using the technique of this embodiment for carrying out the invention.

As shown in FIG. 10, if a reservation is to be made from the mobile telephone which the person carries, the terminal ID of the receiving device to make a recording reservation and information necessary for the recording reservation, e.g., a content ID, recording start time and recording end time, is designated and recording reservation information is transmitted to a recording reservation center. The recording reservation center which received recording reservation information broadcasts the ID of the receiving device and information on the presence of a recording reservation. Since being transmitted by broadcasting, the information is also broadcast to receiving devices having different terminal ID's (ID = 02, 03) as shown in FIG. 10. Since the receiving device having a terminal ID of 01 can recognize that the broadcast information on the presence of a recording reservation is information directed to the receiving device itself, based on the instruction presence information by broadcasting, the receiving device requests information necessary for the recording reservation by communication or the like to a communication device which is to apply recording reservation information to this receiving device. That is, the receiving device requests instruction information. The communication device which received the instruction information request transmits instruction information, which is the information necessary for the recording reservation, to the receiving device (terminal ID = 01) which issued the request by communication means. The data accepting section of this receiving device accepts the instruction information including the information necessary for this recording reservation and feeds the instruction information to the instruction execution section so that the instruction execution section executes the recording reservation. The receiving devices having a terminal ID of other than 01 recognize that the broadcast information on the presence of a recording reservation is not directed to them, and accordingly do not request information necessary for the recording reservation.

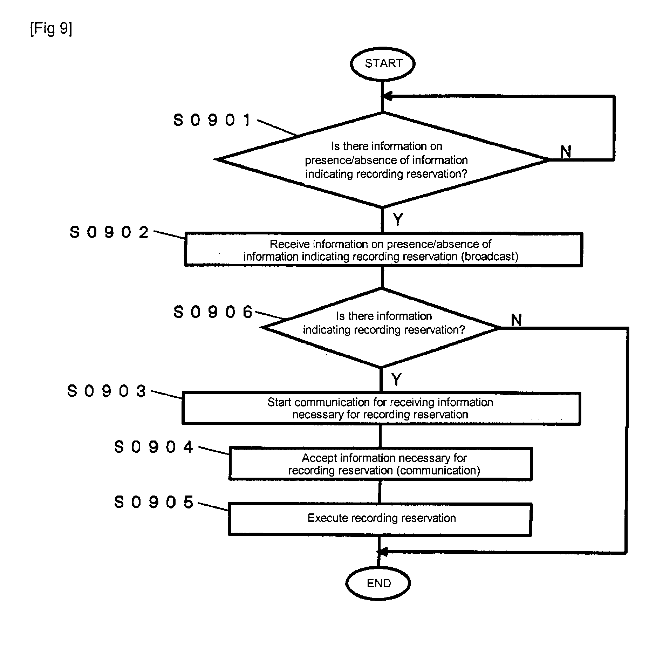

FIG. 9 is a view showing a processing flow in this embodiment for carrying out the invention. First, it is determined whether or not there is information on the presence/absence of information indicating a recording reservation or instruction presence information (in a step S0901). If it is found that there is not such information as a result of the determination, the receiving device is set in a standby state until this information arrives. If it is determined that there is information on the presence/absence of information indicating a recording reservation, the receiving device receives the information on the presence/absence of a recording reservation by broadcasting (in a step S0902). Next, if it is determined that there is such information indicating a recording reservation (in a step S0906), the receiving device starts communication for accepting information necessary for the recording reservation (in a step S0903). If it is determined that there is no information indicating the recording reservation, the receiving device finishes the processing (in a step S0906). Thereafter, the recording device accepts information necessary for the recording reservation (in a step S0904), executes the recording reservation based on the information (in a step S0905) and finishes the processing.

As stated so far, according to this invention, common information and instruction presence information are received by broadcasting and then information inherent to each receiving device and inherent instruction information are accepted by the communication means. Due to this, there is no need to always set the communication means in a standby state to thereby make it possible to save communication fee. Besides, it is possible to efficiently acquire information without the need to occupy a communication line.

In addition, according to the present invention, even if a terminal is constantly connected to a server holding inherent information and variable information, a processing request (call out) is for acquiring the inherent and variable information made after receiving common information and permanent information. Due to this, there is no need to perform polling or the like at certain intervals so as to constantly monitor the occurrence of inherent and variable information as see in the conventional device. Consequently, it is possible to reduce polling load on terminals and to decentralize the concentrated processing requests from many terminals to the server due to the polling.

While the invention has been described and illustrated in connection with preferred embodiments, many variations and modifications as will be evident to those skilled in this art may be made without departing from the spirit and scope of the invention, and the invention is thus not to be limited to the precise details of methodology or construction set forth above as such variations and modification are intended to be included within the scope of the invention.

### EXPLANATION OF REFERENCE SYMBOLS

- 400: receiving device
- 406: broadcast receiving section
- 407: data accepting section
- 408: common information
- 409: inherent information

## Claims

1. A receiving device, comprising:
a broadcast receiving section receiving data by broadcast means; and a data accepting section accepting the data by communication means; wherein:
said broadcast receiving section receives common information common to a plurality of receiving devices; and
said data accepting section accepts inherent information inherent to the receiving device.

2. A receiving device according to claim 1, wherein:
said common information is the common information necessary when the data is accepted by the communication means; and
said inherent information is the information inherent to the receiving device necessary when the data is accepted by the communication means, and
**characterized by** further comprising:
a write section writing said common information and said inherent information.

3. A receiving device comprising: a broadcast receiving section receiving data by broadcast means; and a data accepting section accepting data by communication means; wherein:
said broadcast receiving section receives permanent information which does not change with the passage of time; and
said data accepting section accepts variable information which changes with the passage of time.

4. A receiving device according to claim 3, wherein:
said broadcast receiving section receives the data constituting a hypertext; and
said data accepting section accepts link information which is information indicating links of the hypertext.

5. A receiving device comprising a broadcast receiving section receiving data by broadcast means; and a data accepting section accepting the data by communication means; wherein:
said broadcast receiving section accepts instruction presence information for accepting instruction information which is information indicating an instruction by the communication means, said data accepting section accepts the instruction information, and said receiving device includes a data execution section executing the instruction indicated by the instruction information accepted by said data accepting section.

6. A receiving device according to claim 5, wherein:
said instruction presence information is information indicating presence/absence of an instruction to fetch a mail; and
said instruction information includes a content of an instruction to acquire the mail.

7. A receiving device according to claim 5, wherein:
said instruction presence information is information indicating presence/absence of information indicating a recording reservation, and said instruction information includes information necessary for a recording reservation.
